# EUROPEAN PATENT SPECIFICATION

(11) **EP 3 608 037 B1**
(45) Date of publication and mention of the grant of the patent: **23.03.2022**
(21) Application number: 19190931.6
(22) Date of filing: 09.08.2019
(51) Int. Cl.: B22C 9/08, C22B 9/02

(54) **A FILTER FOR THE FILTRATION OF A LIQUID METAL**
FILTER ZUR FILTRATION EINES FLÜSSIGEN METALLS
FILTRE POUR LA FILTRATION D'UN MÉTAL LIQUIDE

(30) Priority: 10.08.2018 US 201862717120 P
(43) Date of publication of application: 12.02.2020
(73) Proprietor: Les Produits Industriels de Haute Temperature Pyrotek Inc., Sherbrooke, Québec J1L 1W9 (CA)
(72) Inventor: FRITZKE, Jay, North East, PA Pennsylvania 16428 (US); BOUCHARD, Michael, Sherbrooke, Québec J1L1Y2 (CA); CARLSON, Andrew, Spokane, WA Washington 99201 (US); BISHOP, Spencer, Spokane, WA Washington 99204 (US)
(74) Representative: Lavoix

(56) References cited:
- US-A- 5 255 731
- US-A1- 2017 008 075
- US-B1- 6 270 717

## Description

### Field

The invention relates to a filter for the filtering of a liquid metal. The filter is to be received in a mold cavity where the side walls of the filter at least partially contact the side walls of the mold cavity. At least parts of end portions of the side walls abut the face walls of the mold cavity. The filter has a top wall or filtering wall and the filtering process is carried out in any kind of casting processes with the filter, and more particularly, in a gravity casting process or in a low-pressure casting process.

### Background

Filters are used during casting processes to prevent some debris or impurities to enter the cavities. These filters, which are subjected to a pressure exerted by a flow of liquid metal or alloy passing therethrough, may be metallic filters (i.e. grids of metal threads), non-metallic filters (i.e. fabrics of heat resistant fibers eventually provided with a protective coating and/or impregnated with a rigidifying substrate), or ceramic foam filters. Each filter has a geometric configuration for matching with a corresponding geometric configuration defined by the mold housing in which the filter is to be received.

Occasionally the pressure exerted by the flow of liquid metal or alloy passing through the filter may deform the same to allow some debris or impurities to enter the cavity intended to form the molded article. Worst, it may happen that the flow of liquid metal drives the filter within the cavity of the mold. In both situations, resulting articles are rejected by the quality control to thereby reduce the efficiency of the casting process and increase the operation costs.

Normally, debris or impurities are retained by the filter and, after the liquid metal or alloy has solidified within the mold, they remained trapped within a chunk (i.e., protrusion) of metal that will be detached from the molded article by any appropriate means very well known to persons skilled in art; and re-melted for metal recovery.

It is often difficult to efficiently recycle the metal or metal alloy from the chunks. Indeed, filters made of a fabric of metal threads gather at the bottom of the liquid metal or metal alloy (making them hard to recover), and they can partially dissolve into the re-melted metal or metal alloy to contaminate and/or modifying the chemistry of the same. Also, ceramic foam filters can partially disintegrate and contaminate the liquid metal, or gather in the bottom of the liquid metal, making hard to recapture the filters. On the other hand, existing filters made of a rigidified fabric of heat resistant fibers gather at the top of the liquid metal such that it is easier to recapture the filters. An easy and rapid recapturing of the filter is of economical interest.

US Patent 6,270,717 discloses a filtration and distribution device for a molten metal. The device is in the form of a bag having parts made of a solid heat-resistant fabric and open areas made of an open weave heat-resistant fabric. At least some of the parts are made of a moldable or thermo-formable composite being an open weave heat-resistant fabric embedded into a matrix made of a heat-resistant inorganic material compatible with the open weave heat-resistant fabric. The open weave heat-resistant fabric may be made of yarns that are rigidified and protected by a heat-resistant coating. The coating may be made of a heat-resistant inorganic material applied by spraying or dipping after the yarns are weaved.

US Patent 5,255,731 discloses a melt distribution bag-in-a-bag comprising a substantially impermeable built-in inner bag having upstanding side walls and a planar base member in a box-shaped outer bag which is partitioned to provide opposed, spaced-apart discharge zones for the melt. The rectangular box-shaped bag-in-a-bag has an outer bag and an inner bag adapted to be disposed in melt-receiving relationship under the discharge end of a spout. The outer bag has a planar base and upstanding opposed side walls and end walls, the end walls being shorter than the side walls. The laterally spaced-apart upstanding partitions extending transversely from one side wall to the other define a central melt-distribution zone to form the inner bag that is melt-impermeable and that is centrally located within the outer bag. The outer bag has two opposed discharge outlets to avoid accumulation of melt in the discharge zone and to avoid drop of pressure across each discharge outlet.

Filters consisting of a rigidified fabric made from heat resistant fibers or threads made of heat resistant fibers, are of economic interest. Indeed, as the metal chunk (e.g. an aluminum chunk) results from the casting of a metal article into a mold, the chunk contains the fabric filter having filtered the liquid metal poured into the mold. When this chunk is recaptured and then re-melted for recycling purposes, contrary to filters made of steel threads which will gather at the bottom of the melting pots, filters made of rigidified heat resistant fibers float on top of the liquid metal or metal alloy to make them very easy to recapture.

Some attempts were made to embody fabric filters allowing the filtration of liquid metal (e.g. liquid aluminum or aluminum alloys) before being poured into a mold. Fabric made of heat resistant fibers or threads made of heat resistant fibers, are known. They have fibers (e.g. glass fibers) coated with a sizing material (e.g. starch). The existing fabric can be made of unwoven fibers (to form a felt of heat resistant fibers), or made of threads of heat resistant fibers. The threads are woven together according to weaving techniques well known to persons skilled in the art. According to the prior art, such fabric can be rigidified by applying thereon a rigidifying material to make it stiff enough to not being deformed by the pressure of a liquid metal passing through its opening, especially liquid aluminum. However, applying a rigidifying material on the sizing material of the heat resistant fibers reveals to provide serious drawbacks that will discourage a person skilled in the art using filters prepared this way.

The presence of a rigidifying material (i.e. a coating) shows several drawbacks that would discourage a person skilled in the art to consider using such filters for the filtration of liquid metal such as liquid aluminum or aluminum alloys. Indeed, the coating on the fibers of the resulting fabric shows the drawback of generating a clogging and/or partial obstruction of openings between threads (i.e. reducing the mesh size of the fabric filters). Also, because the protective/rigidifying coating is often brittle, particles may detach therefrom to contaminate the liquid aluminum, especially when applied on the sizing material of the fibers. Therefore, up to now, attempts for the replacement of such filters by filters made of a fabric of rigidified heat resistant fibers (e.g. of glass fibers or silica fibers) failed to be successful.

Indeed, contrary to filters made of a fabric of metal threads, existing filters made of a fabric of rigidified heat resistant fibers or threads of heat resistant fibers, are not stiff enough to prevent being deformed by the pressure of the liquid flowing through them, and therefore they fail to work properly (i.e. to efficiently perform the filtration of the liquid metal or the liquid metal alloy). Furthermore, even if existing filters made of a fabric of rigidified heat resistant fibers can be shaped to have an increased filtration surface, they show the drawbacks of having a meshing that may be partially clogged by the substances used for the rigidification of the fabric (thereby reducing the effective filtration surface of the filter). Finally, in some cases, even filters which are made of metal threads may be deformed by the flow of liquid metal or allow, and eventually driven within the cavity of the mold.

Therefore, there is a need in the industry for a fabric filters allowing the filtration of liquid metal, such as liquid aluminum or liquid aluminum alloys, while pouring the liquid metal into a mold, and without having the drawbacks associated with existing filters.

Some, but not all, foundries use magnetic placement of filters in openings of mold housings. This can either be a performed with a magnetic tool used by an operator for manual placement, or a magnetic tool attached to a robot for automated placement. Also, some but not all foundries use X-ray inspection to confirm the filters are properly positioned in the opening of mold housings. It is to be noted that handling of a filter may be difficult to incorporate into an automated and robotized process. Indeed, filters are usually placed across the inlet of the cavity of the mold manually with a tool grasping them.

Therefore, this is a need in the industry for filters that can be easily handled and positioned in openings of mold housings, especially with an automated robotized apparatus.

Moreover, there is a need for a filter made of a fabric of rigidified heat resistant fibers or threads of heat resistant fibers, allowing an easy or rapid recapturing of the filter from liquid metal resulting from chunks of metal obtained from molded articles, thereby defining an economical advantage over existing filters.

Furthermore, there is a need for a filter having a greater filtration surface by modifying its shape.

There is also a need in the metallurgic industry for a filter made of a fabric of heat resistant fibers or threads of the heat resistant fibers in any kind of casting processes using filters, more particularly a gravity casting process or a low-pressure casting process, without having the drawbacks associated with existing filters.

In addition, there is a need for improved filters that will prevent being deformed and/or driven by the pressure exerted by a flow of liquid metal or alloy passing there through during a casting process.

### Summary

As embodied and broadly described herein, according to an embodiment, the invention provides a filter for filtering a liquid metal as defined in claims 1 to 13.

As embodied and broadly described herein, according to an embodiment, the invention provides a filter for filtering a liquid metal and to be received in a mold housing defined by internal side and face walls, the filter comprising a top wall and first, second, third and fourth side walls extending downwardly from the top wall, the first, second, third and fourth side walls being joined together at respective first, second, third and fourth corners, wherein, in use, the top wall is adapted to receive the liquid metal and the first, second, third and fourth side walls are adapted to at least partially contact respective first, second, third and fourth internal side walls of the mold housing in which the filter is received.

The invention provides a filter for filtering a liquid metal and to be received in a mold housing defined by internal side and face walls, the filter comprising a top wall and first, second, third and fourth side walls extending downwardly from the top wall, the first, second, third and fourth side walls being joined together at respective first, second, third and fourth corners, the first, second, third and fourth side walls extending downwardly towards first, second, third and fourth distal end portions, wherein the filter is made of a rigidified fabric of heat resistant fibers or threads of heat resistant fibers, and wherein the top wall and the first, second, third and fourth side walls have a first stiffness and wherein the first, second, third and fourth corners have a second stiffness, the second stiffness being higher than the first stiffness.

With a filter having a top wall or filtering wall, and four side walls extending downwardly from the top wall up to four distal end portions where the four side walls define a quadrilateral (e.g. a rectangle or a square), such a filter allows an easy and consistent placement/position of the filter in the mold housing and ensures that the filter is maintained in place in the mold housing during casting since the side walls of the filter at least partially follow and contact the internal side walls of the mold housing.

With a filter made of a rigidified fabric of heat resistant fibers or threads of heat resistant fibers where the top wall and the side walls have a first stiffness and the corners have a second stiffness that is higher than the first stiffness, those corners increase the strength of the overall filter, while allowing a slight compression of the remainder of the filter to hold the filter in place without distorting the position or shape of the filter, and put the filter in a subtle but continual tension during casting, helping the filter to maintain its shape and integrity throughout casting.

### Brief description of the drawings

A detailed description of the embodiments of the present invention is provided herein below, by way of example only, with reference to the accompanying drawings, in which:
Figure 1 is a top perspective view of a filter in accordance with a first embodiment of the invention;
Figure 2 is another top perspective view of the filter of Figure 1;
Figure 3 is a bottom view of the filter of Figure 2;
Figure 4 a top perspective view of a filter in accordance with a second embodiment of the invention;
Figure 5 is another top perspective view of the filter of Figure 4;
Figure 6 is a bottom perspective view of a filter in accordance with a third embodiment of the invention;
Figure 7 is a bottom perspective view of a filter in accordance with a fourth embodiment of the invention;
Figure 8 is a bottom perspective view of a filter in accordance with a fifth embodiment of the invention;
Figure 9 is a bottom perspective view of a filter in accordance with a sixth embodiment of the invention;
Figure 10 is a perspective top view of a filter in accordance with a seventh embodiment of the invention;
Figure 11 is a top view of the filter of Figure 10;
Figure 12 is a bottom perspective view of a filter in accordance with an eightieth embodiment of the invention;
Figure 13 is a bottom perspective view of a filter in accordance with a ninetieth embodiment of the invention;
Figure 14 is a top perspective view of the filter of Figure 13;
Figure 15 is a bottom perspective view of a filter in accordance with a tenth embodiment of the invention
Figure 16 is a top perspective view of the filter of Figure 15;
Figure 17 is a bottom perspective view of a filter in accordance with an eleventh embodiment, not according to the invention;
Figure 18 is a schematic perspective view of a two-part mold;
Figure 19 is a schematic perspective view of a part of the two-part mold of Figure 18;
Figure 20 is a schematic perspective view of a part of the two-part mold of Figure 18 with a filter received in the mold housing; and
Figure 21 is a graph showing strength results of filters as a function of deflection strength versus deflection.

In the drawings, embodiments of the invention are illustrated by way of examples. It is to be expressly understood that the description and drawings are only for the purpose of illustration and are an aid for understanding. They are not intended to be a definition of the limits of the invention.

### Detailed description of embodiments

Before variants, examples or preferred embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including", "comprising", or "having" and variations thereof herein is meant to encompass the items listed thereafter and equivalents thereof as well as additional items. Unless specified or limited otherwise, the terms "mounted", "connected", "supported", and "coupled" and variations thereof are used broadly and encompass both direct and indirect mountings, connections, supports, and couplings and are thus intended to include direct connections between two members without any other members interposed therebetween and indirect connections between members in which one or more other members are interposed therebetween. Further, "connected" and "coupled" are not restricted to physical or mechanical connections or couplings. Additionally, the words "lower", "upper", "upward", "down" and "downward" designate directions in the drawings to which reference is made. The terminology includes the words specifically mentioned above, derivatives thereof, and words or similar import. Variants, examples or preferred embodiments of the invention are discussed and described hereinbelow.

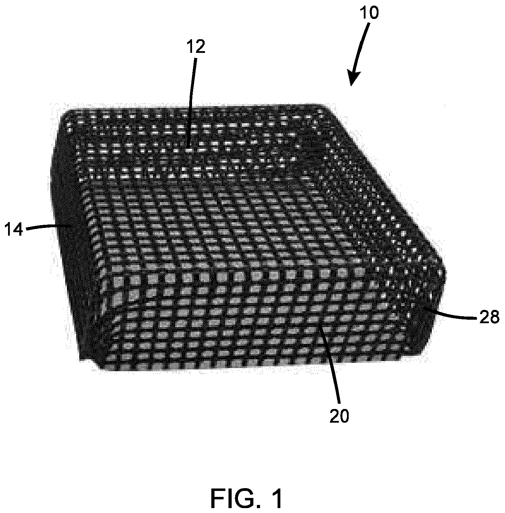

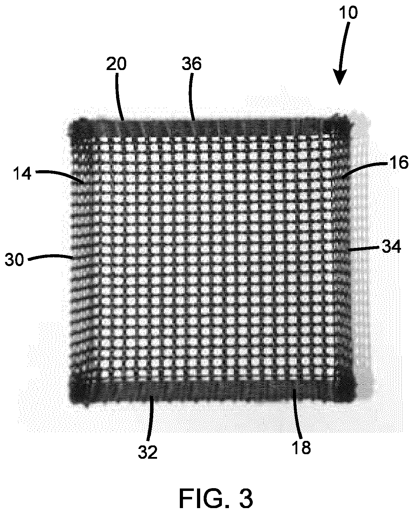

Figures 1 to 3 show a filter 10 for filtering a liquid metal. It is understood that the expression "liquid metal" includes any metal that is suitable to be used in metal casting processes (e.g. gravity casting process or low-pressure casting process) such as metals and alloys such as bronze, brass, aluminum, silver, lead, iron, etc. In use, the filter 10 is received in a mold housing defined by internal side and face walls.

Although the filter 10 can be made of any appropriate material, such as a grid of metal threads according to techniques well known in the art, the filters according to the invention are made of a rigidified fabric comprising heat resistant fibers or threads of heat resistant fibers, and more particularly of a fabric of a rigidified heat resistant material and composition as described in U.S. Publication 2017/0028466. In this publication, the following examples 1-9 are described, which are not according to the invention.

### Example 1

A composition can be prepared as follows. In a first step, a mixture M is prepared by admixing the following ingredients together in a stainless steel container. More particularly, the ingredients of the mixture consisting of: (i) food graded table sucrose, (ii) tap water, (iii) laboratory grade phosphoric acid 75% wt., (iv) calcium phosphate monobasic, (v) aluminum ammonium sulfate. A 1kg of mixture M containing 55.0 wt % of sucrose, 41.5 wt % of tap water, 1,1 wt % of phosphoric acid 75% wt., 1.0 wt % aluminium ammonium sulfate, and 1.4 gr (1.4 wt %) calcium phosphate monobasic is prepared by adding into the container, 550 gr of sucrose, 41.5 gr of tap water, 1.1 gr of phosphoric acid 75%, 1.0 gr of aluminum ammonium sulfate, and 1.4 gr of calcium phosphate monobasic, and then mixed together with a paint mixer until obtaining the mixture M. Then, the mixture M is subjected to heating until a temperature of 100°C to 103°C was reached for at least 5 minutes, to thereby form a caramel defining a product A. The product A is thereafter allowed to cool at room temperature. In a second step, 515 gr. of a product B which is a colloidal dispersion of submicron-sized silica particles in the form of tiny spheres, in an alkaline aqueous solution and sold under the trademark NALCO 1144^{®}, is added to the 1.0 kg of the product A obtained in the previous step, and then ingredients A and B are mixed together with the paint mixer. The mixing was carried out at room temperature until a homogeneous composition was obtained (i.e. about 10 minutes). The composition was comprising about 66 wt % of the product A and about 34 wt % of the product B.

### Example 2

A fabric of glass fibers that is substantially free of a sizing material consisting of starch is prepared. The fabric of glass fiber that can be used as a starting material may be fabrics made of threads of glass fibers coated with starch. More particularly, the fabric may be selected amongst those listed in the following table:

| Fiberglass filtration product - with starch coating | | | | | | | |
|---|---|---|---|---|---|---|---|
| Specification table (metric values) | | | | | | | |
| Style | Thread Diameter | | Thread Count | Holes | Opening Sizes | Open area % | Weave Type |
| Number | Warp mm | Fill mm | Per cm² | Per cm² | Per cm² | | |
| 34L | 0.864 | 0.940 | 34.3 × 29 | 10 | 0.0512 | 50.9 | Leno |
| 34P4 | 0.787 | 1.016 | 37.3 × 31 | 12 | 0.0418 | 48.4 | Plain |
| 36F | 0.686 | 1.118 | 40.9 × 34 | 14 | 0.0321 | 44.6 | Plain |
| 36L | 0.914 | 0.864 | 38.4 × 36 | 14 | 0.0322 | 44.5 | Leno |
| 36P | 0.686 | 0.838 | 40.9 × 37.8 | 15 | 0.0315 | 48.7 | Plain |
| 36P4 | 0.787 | 1.067 | 37.3 × 41 | 15 | 0.0260 | 39.7 | Plain |
| 40F | 0.686 | 1.118 | 40.9 × 37.8 | 15 | 0.0269 | 41.6 | Plain |
| 40L | 0.940 | 0.864 | 43.8 × 36 | 16 | 0.0255 | 40.3 | Leno |
| 40P | 0.686 | 0.838 | 44.9 × 44.4 | 20 | 0.0218 | 43.5 | Plain |
| 40P4 | 0.813 | 0.991 | 36.8 × 34.1 | 13 | 0.0368 | 46.3 | Plain |
| 42F | 0.762 | 1.118 | 44.9 × 38 | 17 | 0.0222 | 37.8 | Plain |
| 42P | 0.737 | 0.864 | 44.9 × 46.5 | 21 | 0.0191 | 40.1 | Plain |
| 43FK | 0.762 | 1.118 | 54 ×42 | 23 | 0.0138 | 31.2 | Plain |
| 43P | 0.737 | 1.864 | 54 × 50.6 | 27 | 0.0124 | 33.9 | Plain |
| 43P4 | 0.889 | 1.168 | 54 × 47 | 25 | 0.0092 | 24.3 | Plain |
| 55F | 0.533 | 0.787 | 65.8 × 56.9 | 37 | 0.0095 | 35.9 | Plain |

Product 40L may be used as starting material. In Example 2, a fabric of glass fibers of the type 40L coated with a layer of starch (as a sizing agent) is subjected to a heat treatment in an oven at 450°C for about 2 minutes, to burnout the starch (in the presence of oxygen) and thereby remove the sizing agent.

### Example 3

A rigidified thermoplastic fabric of glass fibers is prepared wherein a fabric of glass fibers as obtained from Example 2 is impregnated with the composition of Example 1 to obtain a fabric impregnated with the composition. More particularly, the fabric is passed in a reservoir containing the composition and then between a pair of opposite rubber-rolls of a two-rollers impregnator. The impregnated fabric so obtained is then subjected to a heating treatment in a continuous oven at a temperature of about 160°C for about 2 minutes to place the composition impregnated therein into a softened thermoplastic state. Then, the thermosettable fabric so obtained (i.e. impregnated with the composition transformed into a thermoplastic state) is ready to be used for further treatments such as an optional forming the thermoplastic fabric into a desired size and/or shape, and then a thermosetting treatment to thermoset the composition and provide a rigidified fabric of the heat resistant glass fibers. If not used immediately, the fabric may be allowed to cool at room temperature.

### Example 4

The fabric impregnated with the composition obtained from Example 3 is cut into a flat sheet and then is subjected to a thermosetting treatment in an oven at 450°C for 2 minutes to rigidify the fabric of the glass fibers. This rigidified fabric which originates from the 40L type fabric of glass fiber has openings of 0.0255 cm².

### Example 5

The thermoplastic fabric obtained from Example 3 cooled at room temperature is cut into a flat sheet and then placed in a hot mold consisting of a pair of opposite mold halves, to thereby soften and mold the flat sheet of fabric into a desired shape by compression-molding. Then, the shaped fabric so obtained is ready to be used for further treatments such as a thermosetting treatment to thermoset the composition and provide a rigidified fabric of the heat resistant glass fibers.

### Example 6

The shaped fabric obtained from Example 5 is subjected to a thermosetting treatment in an oven at 450°C for 2 minutes to rigidify the fabric of the glass fibers of the threads. This shaped rigidified fabric which originates from a 40L type fabric of glass fiber has openings of 0.0255cm².

### Example 7

The fabric obtained from Example 3 is cut into a flat sheet and while being still in a softened thermoplastic state, placed in a cold mold consisting of a pair of opposite mold halves, to thereby obtain a fabric into a desired shape by compression-molding. Then, the shaped fabric so obtained is subjected to a thermosetting treatment in an oven at 450°C for 2 minutes to rigidify the fabric of the glass fibers. The shaped rigidified fabric so obtained can be used as a filter for liquid metal, especially in a low-pressure casting process or gravity casting process.

### Example 8

A rigidified fabric of glass fibers is prepared wherein a fabric of threads of glass fibers as obtained from Example 2 is impregnated according to Example 3 with the composition of Example 1 to obtain a fabric impregnated with the composition. More particularly, the fabric is passed successively across the composition and then between pair of opposite rubber-rolls, which are pressed one against the other, to push an amount of the composition within the openings existing between fibers of the threads forming the fabric. The impregnated fabric so obtained is then subjected to a heating treatment in a continuous oven at a temperature of about 160°C for about 2 minutes to place the composition impregnated therein into a softened thermoplastic state. Then, the fabric so obtained (i.e. impregnated with the composition transformed into a thermoplastic state) is ready to be used for further treatments such as an optional forming the thermoplastic fabric into a desired shape, and then a thermosetting treatment to thermoset the composition and provide a rigidified fabric of the heat resistant glass fibers of the threads. If not used immediately, the fabric may be allowed to cool at room temperature.

### Example 9

The fabric obtained from Example 8 and cooled at room temperature is cut into a flat sheet and then placed in a hot mold consisting of a pair of opposite mold halves to thereby soften and mold a filter having a particular structural shape and orientation, by compression-molding. Then, the shaped fabric is allowed to cool. Compression molding is carried out at about 160°C. The shaped fabric so obtained is ready to be used for further treatments such as a thermosetting treatment to thermoset the composition and provide a rigidified fabric of the heat resistant glass fibers of the threads of glass fibers.

Hence, according to the invention, the filter 10 is made of a rigidified fabric of heat resistant fibers or threads of heat resistant fibers. The fibers may be impregnated with a composition comprising a mixture of a first product obtained by polymerisation of saccharide units and a second product consisting of at least one inorganic colloidal binding agent. The fibers may be glass fibers, silica fibers or a mixture thereof, impregnated with a first product obtained by caramelization of a mixture comprising sucrose, water, and at least one additive selected from the group consisting of acids, inorganic wetting agents and acid phosphate adhesives

Reverting to Figures 1 to 3, the filter 10 comprises a top wall 12, or filtering wall, which is normally the main filtering portion of the filter 10 and is to be located transverse to the liquid flow in use. The filter 10 also comprises a first side wall 14, a second side wall 16, a third side wall 18 and a fourth side wall 20 extending downwardly from the top wall 12. The first, second, third and fourth side walls are joined together at respective first, second, third and fourth corners 22, 24, 26, 28. Moreover, the first, second, third and fourth side walls 14, 16, 18, 20 extend downwardly towards first, second, third and fourth distal end portions 30, 32, 34, 36.

The filter may be made of a flat sheet of fabric of Example 3 or Example 8 discussed hereinabove. Before the thermoforming or compression-molding process, the sheet of fabric may be cutaway in the corner(s) (i.e. rounded cut). During the thermoforming or compression-molding process, the sheet of fabric is thermoformed/molded such that the corners are formed without bunching.

It is understood that the filter 10 may be made in a thermoforming or compression-molding process where a pre-cut sheet of fabric with fibers is inserted into the cavity of one of a male-female mold. The male and female portions of the molds define the inner and outer surfaces of filter. For instance, the male portion of the molds defines the inner surfaces of the filter whereas the female portion of the molds defines the outer surfaces of the filters. The pre-cut sheet may be aligned and temporarily secured to one of the mold portions using any suitable means to accurately position the pre-cut sheet within the mold and maintain same in position when the mold is closed. Once the mold is closed over the pre-cut sheet, the mold is heated up to the thermoforming temperature of the pre-cut sheet and male and female portions are pressed against the pre-cut sheet so that the pre-cut sheet will set to the three-dimensional shape defined by the male and female portions of the mold.

After the thermoforming or compression-molding process, it is understood that the shaped filter so obtained is ready to be used for further treatments such as a thermosetting treatment to thermoset the composition and provide a rigidified filter of the heat resistant glass fibers. By utilizing different sheets of fabric with fibers, different materials, or the same material with different fibers densities, the designers are able to vary the mechanical properties of the filter.

The top wall 12 and the first, second, third and fourth side walls 14, 16, 18, 20 have a first stiffness and the first, second, third and fourth corners 22, 24, 26, 28 have a second stiffness wherein the second stiffness is higher than the first stiffness. The top wall 12 and the first, second, third and fourth side walls 14, 16, 18, 20 have a first fibers density and the first, second, third and fourth corners 22, 24, 26, 28 have a second fibers density wherein the second fiber density is higher than the first fiber density. The top wall 12 and the first, second, third and fourth side walls 14, 16, 18, 20 may be construed as a first substructure with a first stiffness and the first, second, third and fourth corners 22, 24, 26, 28 may be together construed as a second substructure having a second stiffness, wherein the second stiffness is greater than the first stiffness. The first, second, third and fourth corners 22, 24, 26, 28 thus define stiffening corners that provide reinforcement in the corner regions and that increase the overall strength, stiffness or rigidity of the filter 10.

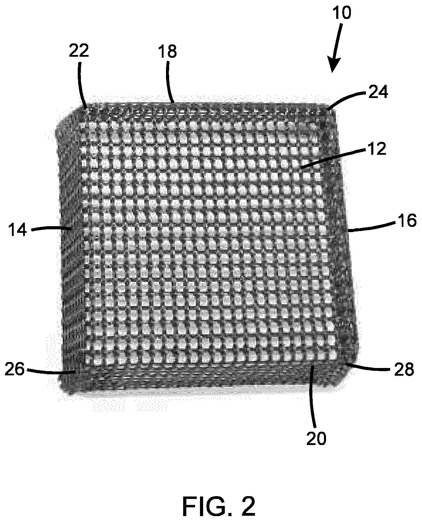

As seen in Figure 2, the first and third side walls 14, 18 oppose the second and fourth side walls 16, 20 and the first, second, third and fourth side walls 14, 16, 18, 20 define a quadrilateral (e.g. parallelogram, a trapezium, a rhombus, a kite, a rectangle or a square). In another variant, the filter may have a top wall with five side walls extending downwardly from the top wall and joined together at five stiffening corners where the five side walls define a shape such as a pentagon. In a further variant, the filter may have a top wall with six side walls extending downwardly from the top wall and joined together at six stiffening corners where the six side walls define a shape such as a hexagon. In another variant, the filter may have a top wall with eight side walls extending downwardly from the top wall and joined together at eight stiffening corners where the eight side walls define a shape such as an octagon.

As it is well known in the art, filtering efficiency depends on correct placement of the filter in the mold housing since filters are typically designed to work in one orientation Because the filter may have four, five, six or eight side walls defining a shape such as a rectangle, square, pentagon, hexagon or octagon, this minimize the chance of the filter being placed with incorrect orientation within the mold housing since the walls are adapted to follow or contact the internal side walls of the mold housing.

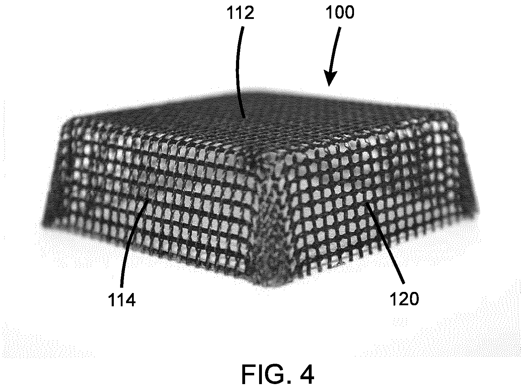

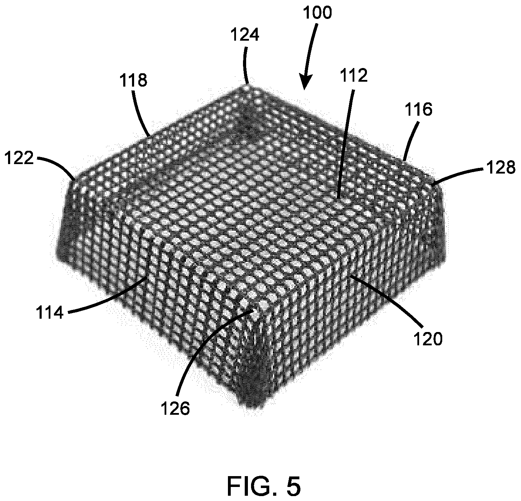

Figures 4 and 5 show a filter 100 that generally corresponds to the filter 10 except that the filter 100 has first, second, third and fourth side walls 114, 116, 118, 120 where each side wall extends downwardly and outwardly from the top face 112 such that the filter 100 has a frustopyramidal shape. In this variant, the filter 100 is adapted to allow stacking of a second filter into it. The filter 100 has first, second, third and fourth corners 122, 124, 126, 128.

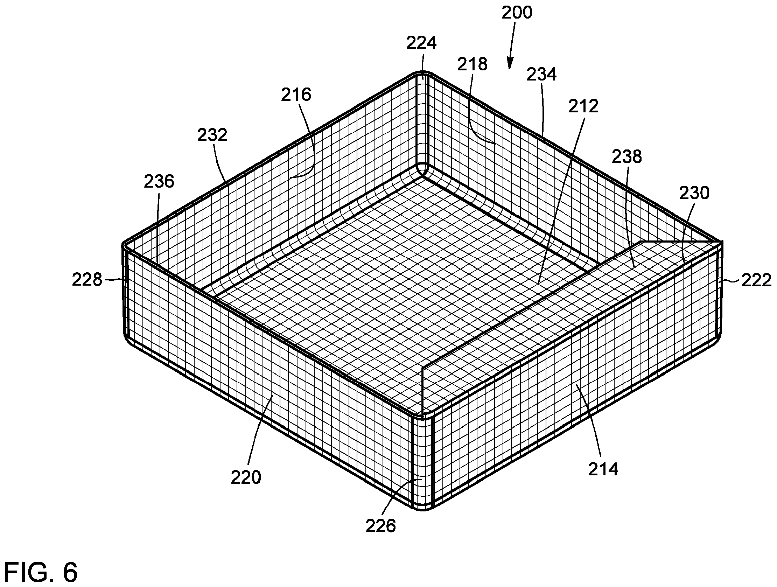

Figure 6 shows a filter 200 that generally corresponds to the filter 10 except that the filter 200 has first, second, third and fourth side walls 214, 216, 218, 220 extending downwardly from the top wall 212 towards first, second, third and fourth distal end portions 230, 232, 234, 236, wherein the distal end portion 230 has a first facing end portion 238 extending inwardly from the first distal end portion 230. The filter 200 has first, second, third and fourth corners 222, 224, 226, 228.

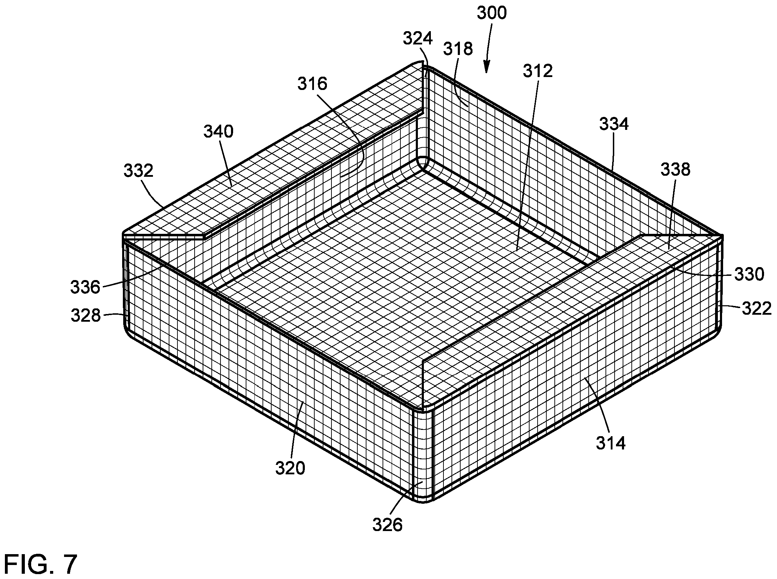

Figure 7 shows a filter 300 that generally corresponds to the filter 10 except that the filter 300 has first, second, third and fourth side walls 314, 316, 318, 320 extending downwardly from the top wall 312 towards first, second, third and fourth distal end portions 330, 332, 334, 336, wherein the first distal end portion 330 has a first facing end portion 338 extending inwardly from the first distal end portion 330 and the second distal end portion 332 has a second facing end portion 340 extending inwardly from the second distal end portion 332. The filter 300 has first, second, third and fourth corners 322, 324, 326, 328.

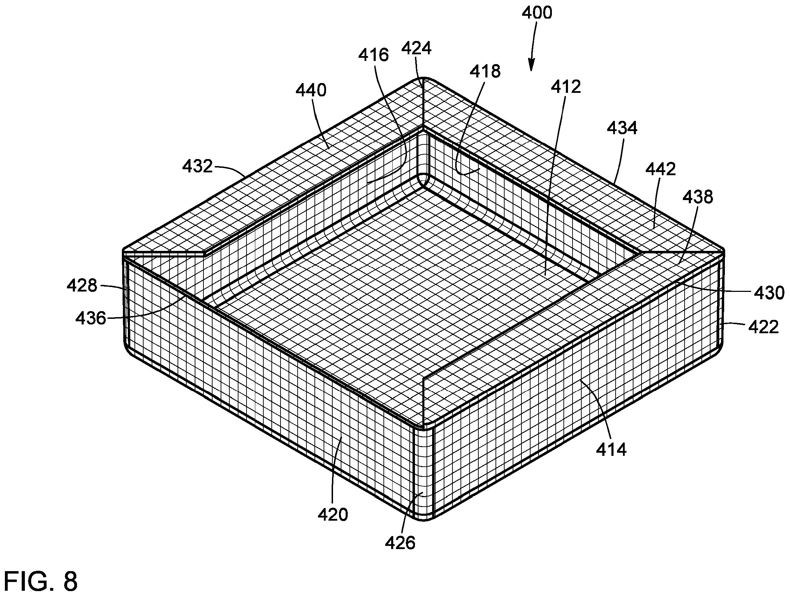

Figure 8 shows a filter 400 that generally corresponds to the filter 10 except that the filter 400 has first, second, third and fourth side walls 414, 416, 418, 420 extending downwardly from the top wall 412 towards first, second, third and fourth distal end portions 430, 432, 434, 436, wherein the first distal end portion 430 has a first facing end portion 438 extending inwardly from the first distal end portion 430, the second distal end portion 432 has a second facing end portion 440 extending inwardly from second first distal end portion 432, and the third distal end portion 434 has a third facing end portion 442 extending inwardly from the third distal end portion 434. The filter 400 has first, second, third and fourth corners 422, 424, 426, 428.

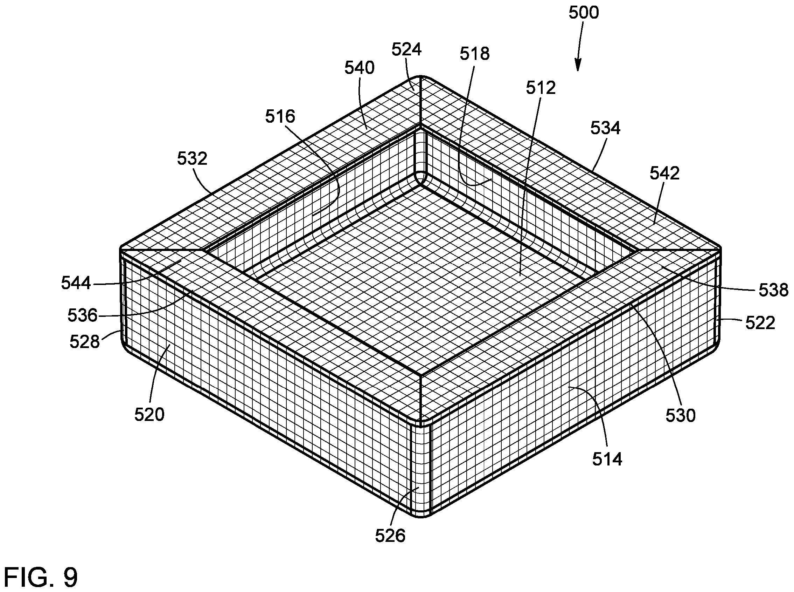

Figure 9 shows a filter 500 that generally corresponds to the filter 10 except that the filter 500 has first, second, third and fourth side walls 514, 516, 518, 520 extending downwardly from the top wall 512 towards first, second, third and fourth distal end portions 530, 532, 534, 536, wherein the first distal end portion 530 has a first facing end portion 538 extending inwardly from the first distal end portion 530, the second distal end portion 532 has a second facing end portion 540 extending inwardly from the second distal end portion 532, the third distal end portion 534 has a third facing end portion 542 extending inwardly from the third distal end portion 534, and the fourth distal end portion 536 has a fourth facing end portion 544 extending inwardly from the fourth distal end portion 536.

The filter 500 has first, second, third and fourth corners 522, 524, 526, 528.

It is understood that each of the first, second, third and fourth side walls of the filters 200, 300, 400, 500 may extend downwardly and outwardly from the top face such that the filter has a frustopyramidal shape.

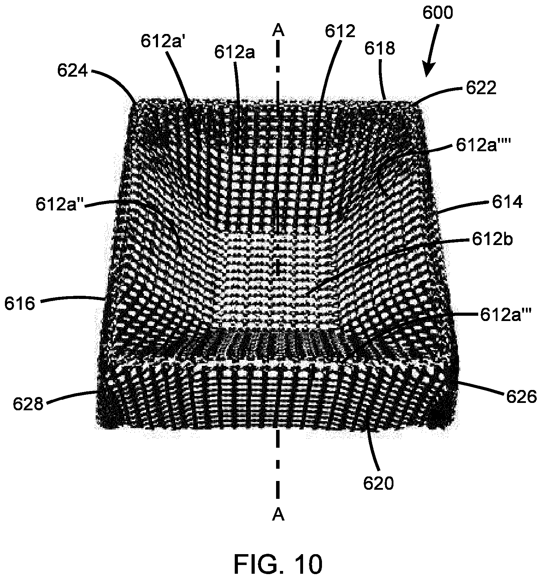

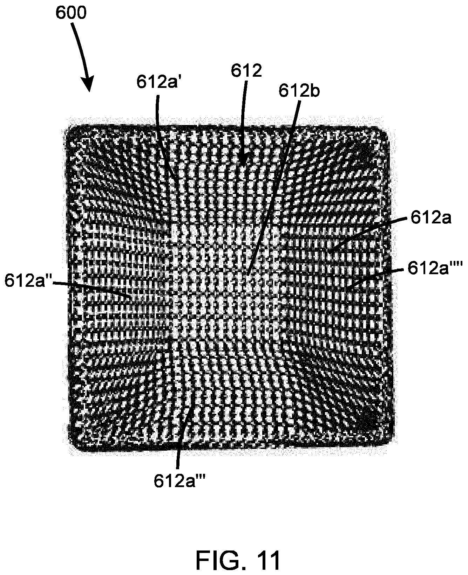

Figures 10 and 11 show a filter 600 that generally corresponds to the filter 10 except that the filter 600 has a top wall 612 that is different than the top wall 12. The filter 600 has first, second, third and fourth side walls 614, 616, 618, 620 extending downwardly from the top wall 612. The filter 600 has first, second, third and fourth corners 622, 624, 626, 628.The filter 600 extends along a longitudinal axis A-A residing within an imaginary longitudinal plane that bisects the filter 600 in two halves, wherein the top wall 612 comprises a first portion 612a and a second portion 612b connected to the first portion 612a, the second portion 612b extending transversely with respect to the longitudinal axis A-A and being located downwards the first portion 612a along the longitudinal axis A-A. The first portion 612a defines a first filtering surface and the second portion 612b defines a second filtering surface. In the filter 600, the first surface 612a is defined by first, second, third and fourth trapezium surface portions 612a′, 612aʺ, 612a‴, 612aʺʺ and the second surface 612b is a square surface. The second portion 612b is centrally located with respect to the longitudinal axis A-A passing through the center of the filter. The first and second portions 612a, 612b define an internal protuberance for handling the filter 600 with a tool or gripping device.

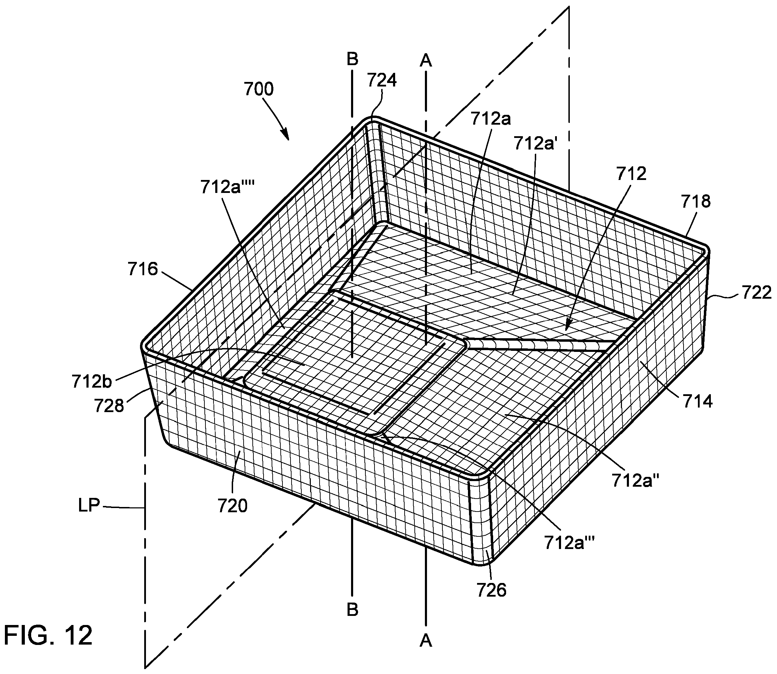

Figure 12 shows a filter 700 that generally corresponds to the filter 10 except that the filter 700 has a top wall 712 that is different than the top wall 12. The filter 700 has first, second, third and fourth side walls 714, 716, 718, 720 extending downwardly from the top wall 712. The filter 700 has first, second, third and fourth corners 722, 724, 726, 728. The filter 700 extends along a longitudinal axis A-A residing within an imaginary longitudinal plane LP that bisects the filter 700 in two halves, wherein the top wall 712 comprises a first portion 712a and a second portion 712b connected to the first portion 712a, the second portion 712b extending transversely with respect to the longitudinal axis A-A and being located downwards the first portion 712a along the longitudinal axis A-A. The first portion 712a defines a first filtering surface and the second portion 712b defines a second filtering surface. In the filter 700, the first surface 712a is defined by first, second, third and fourth trapezium surface portions 712a′, 712aʺ, 712a‴, 712aʺʺ and the second surface 712b is a square surface. The filter 700 also extends along a longitudinal axis B-B, which is parallel to the longitudinal axis A-A, and the second portion 712b is centrally located with respect to the longitudinal axis B-B. The first and second portions 712a, 712b define an internal protuberance for handling the filter 700 with a tool or gripping device.

It is understood that each of the first, second, third and fourth side walls 614, 616, 618, 620 and 714, 716, 718, 720 may extend downwardly and outwardly from the top wall such that the filters 600, 700 each has a frustopyramidal shape and each is adapted to allow stacking of a second filter into the filter.

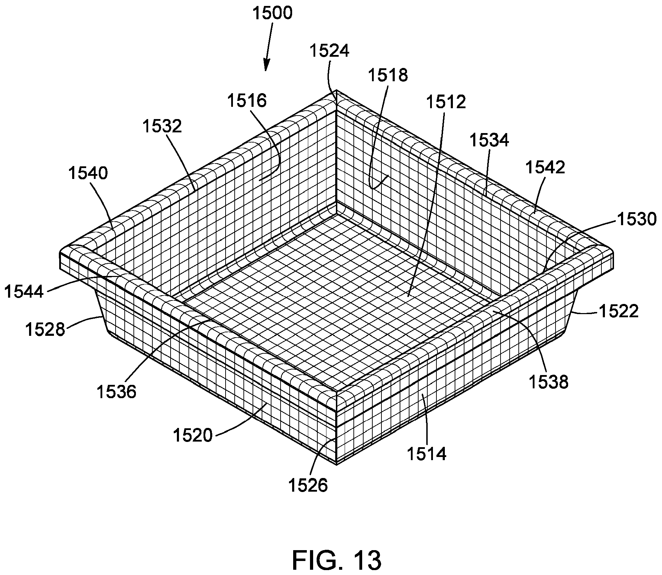

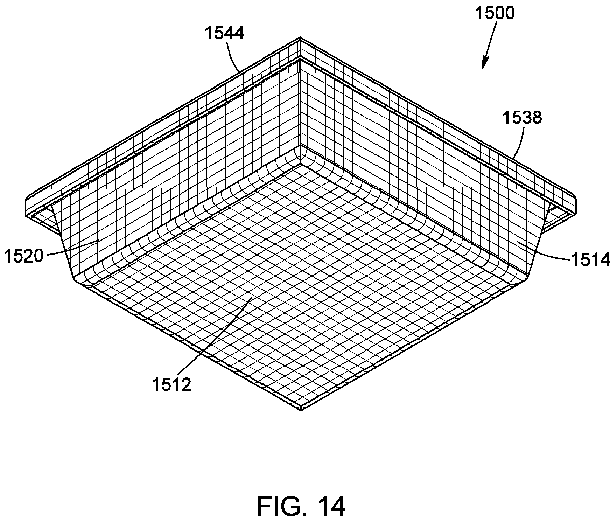

Figures 13 and 14 show a filter 1500 that generally corresponds to the filter 10 except that the filter 1500 has first, second, third and fourth side walls 1514, 1516, 1518, 1520 extending downwardly from the top wall 1512 towards first, second, third and fourth distal end portions 1530, 1532, 1534, 1536, wherein the first distal end portion 1530 has a first facing end portion 1538 extending outwardly from the first distal end portion 1530, the second distal end portion 1532 has a second facing end portion 1540 extending outwardly from the second distal end portion 1532, the third distal end portion 1534 has a third facing end portion 1542 extending outwardly from the third distal end portion 1534, and the fourth distal end portion 1536 has a fourth facing end portion 1544 extending outwardly from the fourth distal end portion 1536. The filter 1500 has first, second, third and fourth corners 1522, 1524, 1526, 1528.

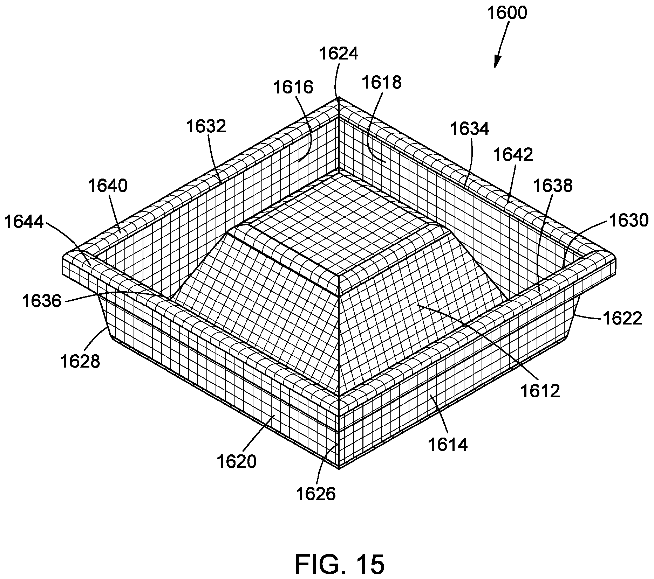

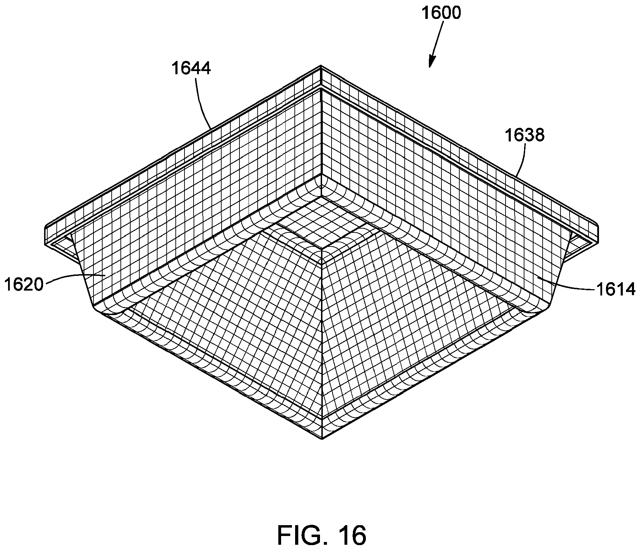

Figures 15 and 16 show a filter 1600 that generally corresponds to the filter 600 except that the filter 1600 has a top wall 1612, first, second, third and fourth side walls 1614, 1616, 1618, 1620 and first, second, third and fourth distal end portions 1630, 1632, 1634, 1636, wherein the first distal end portion 1630 has a first facing end portion 1638 extending outwardly from the first distal end portion 1630, the second distal end portion 1632 has a second facing end portion 1640 extending outwardly from the second distal end portion 1632, the third distal end portion 1634 has a third facing end portion 1642 extending outwardly from the third distal end portion 1634, and the fourth distal end portion 1636 has a fourth facing end portion 1644 extending outwardly from the fourth distal end portion 1636. The filter 1600 has first, second, third and fourth corners 1622, 1624, 1626, 1628.

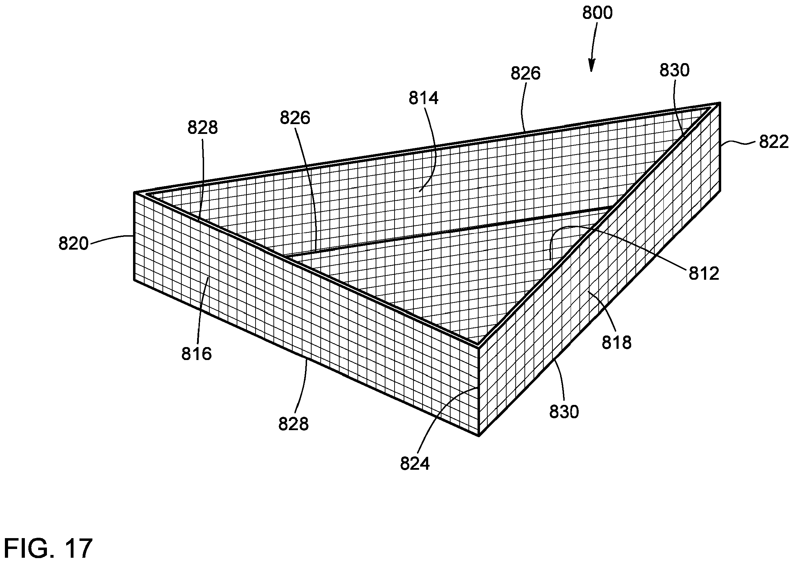

Figure 17 shows a filter 800 in accordance with another variant, not according to the invention. The filter 800 comprises a top wall 812 and three side walls 814, 816, 818 extending downwardly from the top wall 812 and that are joined together at three respective corners 820, 822, 824. In this variant, the three side walls 814, 816, 818 define a triangle. The side walls extend towards first, second and third distal end portions 826, 828, 830. The three corners 820, 822, 824 are stiffening corners after the thermoforming or compression-molding process since these corners have higher stiffness, higher fiber density or define a substructure with higher stiffness or rigidity. In use, the top wall 812 is adapted to receive the liquid metal and the three side walls 814, 816, 818 are adapted to at least partially contact the internal side walls of the mold housing in which the filter 800 is received. The filter 800 may be made of a rigidified fabric of heat resistant fibers or threads of heat resistant fibers. The fibers may be impregnated with a composition comprising a mixture of a first product obtained by polymerisation of saccharide units and a second product consisting of at least one inorganic colloidal binding agent. The fibers may be glass fibers, silica fibers or a mixture thereof, impregnated with a first product obtained by caramelization of a mixture comprising sucrose, water, and at least one additive selected from the group consisting of acids, inorganic wetting agents and acid phosphate adhesives.

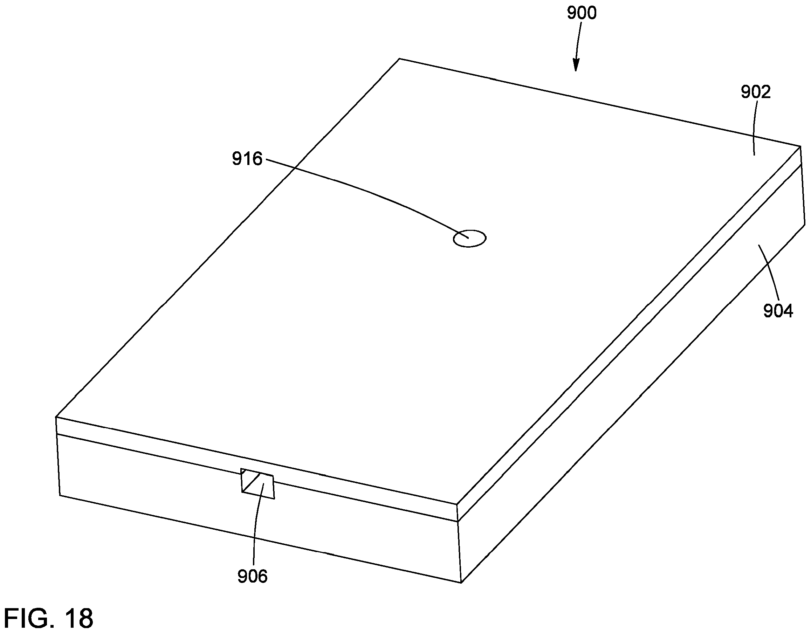

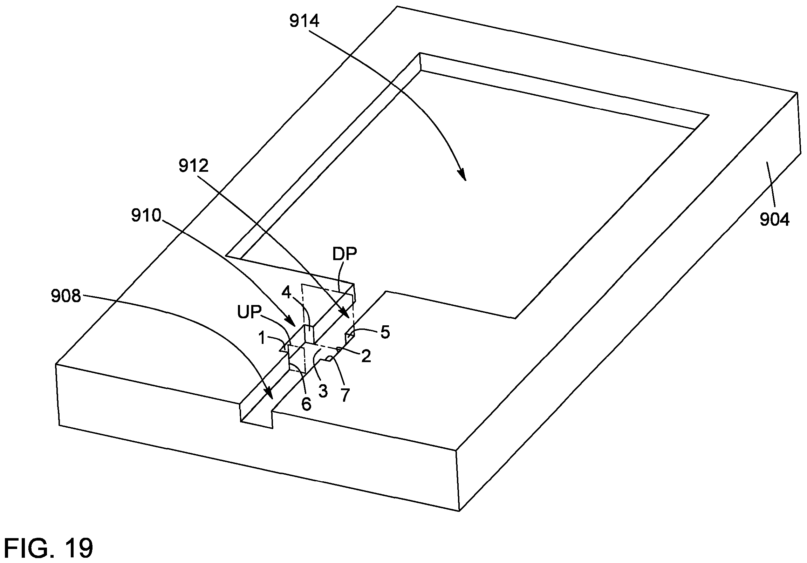

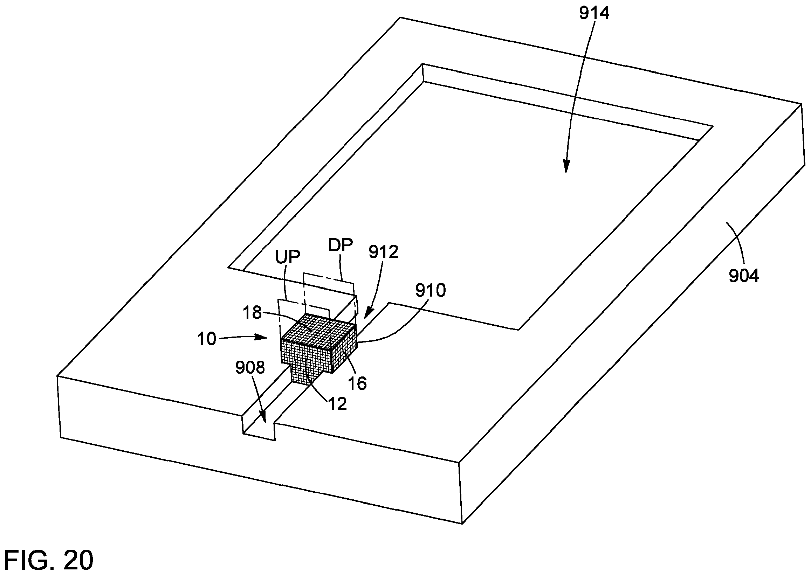

Figure 18 show a two-part mold 900 comprising a first part 902 and a second part 904 which are each provided with an internal cavity 906 when both parts are maintained and pressed one against the other. As best shown in Figures 19 and 20, in the second part 904, an inlet conduit 908, a mold housing 910, an outlet conduit 912 and a mold cavity 914 are provided. It is understood that the second part may have corresponding inlet conduit, mold housing, outlet conduit and mold cavity and that the internal cavity 906 of the mold 900 is then defined by the inlet conduits, mold housings, outlet conduits and mold cavities of the first and second parts 902, 904. The first part 902 also comprises an opening or internal conduit 916 for allowing air contained within the mold cavity to escape during the filling of the mold cavity with liquid metal. The inlet and outlet conduits 908, 912 are in fluid communication with the mold housing 910 such that liquid metal flowing in the conduits 908, 912 also passes through the mold housing 910 where a filter is to be received.

As best shown in Figure 19, the mold housing is defined by a first internal side wall 1, a second internal side wall 2, and a third internal side wall 3. It is understood that the mold housing may be defined by first, second and third internal side walls provided in the second part. The mold housing is further defined by a first internal face wall 4 and a second internal face wall 5. Again, it is understood that the mold housing may be defined by first and second internal face walls provided in the second part. The mold housing is also defined by a first internal back wall 6 and a second internal back wall 7. Again, it is understood that the mold housing may be defined by first and second internal back walls provided in the second part. The first and second internal face walls can be also designated as first and second downstream walls located in a downstream plane DP that is transverse to the flow of the liquid metal and the opposite internal back walls can be designated as upstream walls located in an upstream plane UP transverse to the flow of the liquid metal.

Figure 20 shows the filter 10 received in the mold housing 910. In use, liquid metal is poured into the inlet conduit 908 to flow through the inlet conduit 908 towards the filter 10 positioned in the mold housing 910, where the liquid metal is filtered, and then into the outlet conduit 912 and the cavity 914 itself. This process of pouring liquid metal into the two-part mold 900 is called gravity casting process. Once the liquid metal has cool, both parts 902, 904 of the two-part mold 900 are separated and the solid article is removed.

In use, the filter may be placed in the mold housing 910 such that the top wall or filtering wall of the filters 10, 100, 200, 300, 400, 500, 600, 700, 1500, 1600, 800 is in an imaginary filtering section that is transverse to the flow of the liquid metal and that is adjacent to the upstream plane UP and such that parts of the first, second, third and fourth distal end portions of the filters 10, 100, 200, 300, 400, 500, 600, 700 1500, 1600 are adapted to abut against two face walls of the mold housing and parts of the first, second and third distal end portions of the filter 800 are adapted to abut against three face walls of the mold housing.

Alternatively, in use, the filter may be placed in the mold housing 910 in another orientation, or reverse orientation, such that the top wall or filtering wall of the filters 10, 100, 600, 700, 1500, 1600, 800 is in an imaginary filtering section that is transverse to the flow of the liquid metal and that is adjacent to the downstream plane DP and such that parts of the top wall are adapted to abut against first and second face walls of the mold housing.

In addition, in use, the first, second, third and fourth side walls of the filters 10, 100, 200, 300, 400, 500, 600, 700, 1500, 1600, and the first, second and third side walls of the filter 800 are adapted to follow and contact respective side walls of the mold housing. In use, because of the shape of the side walls of the filters 10, 100, 200, 300, 400, 500, 600, 700, 1500, 1600, 800 that are joined together at corners, each filter allows an easy and consistent placement/position of the filter in the mold housing and ensures that the filter is maintained in place in the mold housing during casting since the side walls of the filter at least partially follow and contact internal side walls of the mold housing.

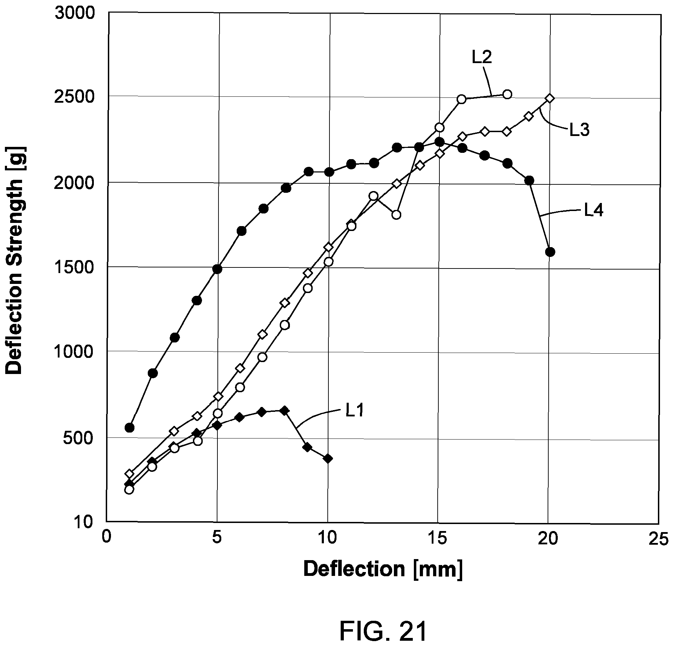

Filters 10, 100, 200, 300, 400, 500, 600, 700, 1500, 1600, 800 made of a rigidified fabric of heat resistant fibers or threads of heat resistant fibers where the top wall and side walls have a first stiffness and the corners have a second stiffness that is higher than the first stiffness, those corners increase the strength of the overall filter, those corners, or a combination of those corners and side walls and top wall, may also allow a slight compression of the filter to hold the filter in place without distorting the position or shape of the filter, and those corners, or a combination of those corners and side walls and top wall, may put the filter in a subtle but continual tension during casting, helping the filter to maintain its shape and integrity throughout casting. Each of the filters 10, 100, 200, 300, 400, 500, 600, 700, 1500, 1600, 800 has a strength, stiffness or rigidity that is higher than the one of existing filters. In fact, the strength of the filter of the invention may be at least two times greater than the one of the "M" shape filter disclosed in U.S. Publication 2017/0028466. In this regard, Figure 21 shows strength results of filters as a function of deflection strength versus deflection where line L1 shows strength results for a filter similar to the "M" shape filter disclosed in U.S. Publication 2017/0028466, lines L2 and L3 show strength results for a filter such as filters 200, 300, 400, 500, 1500 and line L4 shows strength results for a filter such as filters 600, 700, 1600.

The above description of the embodiments should not be interpreted in a limiting manner since other variations, modifications and refinements are possible within the scope of the present invention. Accordingly, it should be understood that various features and aspects of the disclosed embodiments can be combined with or substituted for one another in order to form varying modes of the disclosed invention. The scope of the invention is defined in the appended claims and their equivalents.

## Claims

1. A filter (10; 100; 200; 300; 400; 500; 600; 700; 1500; 1600) for filtering a liquid metal and to be received in a mold housing defined by internal side and face walls, the filter comprising a top wall (12; 112; 212; 312; 412; 512; 612; 712; 1512; 1612) and first, second, third and fourth side walls (14, 16, 18, 20; 114, 116, 118, 120; 214, 216, 218, 220; 314, 316, 318, 320; 414, 416, 418, 420; 514, 516, 518, 520; 614, 616, 618, 620; 714, 716, 718, 720; 1514, 1516, 1518, 1520, 1614, 1616, 1618, 1620) extending downwardly from the top wall, the first, second, third and fourth side walls being joined together at respective first, second, third and fourth corners (22, 24, 26, 28; 122, 124, 126, 128; 222, 224, 226, 228; 322, 324, 326, 328; 422, 424, 426, 428; 522, 524, 526, 528; 622, 624, 626, 628; 722, 724, 726, 728; 1522, 1524, 1526, 1528; 1622, 1624, 1626, 1628), the first, second, third and fourth side walls extending downwardly towards first, second, third and fourth distal end portions (230, 232, 234, 236; 330, 332, 334, 336; 430, 432, 434, 436; 530, 532, 534, 536; 1530, 1532, 1534, 1536; 1630, 1632, 1634, 1636), wherein the filter
(i) is made of a rigidified fabric comprising heat resistant fibers or threads of heat resistant fibers
(ii) is obtained by moulding and hardening of a flat sheet of a fabric comprising the heat resistant fibers or the threads of heat resistant fibers to form said top wall, said first, second, third and fourth side walls and said first, second, third and fourth corners, and
(iii) has a deflection strength,
wherein
- the top wall and the first, second, third and fourth side walls have a first fiber density and the first, second, third and fourth corners have a second fiber density, the second fiber density being higher than the first fiber density such that the first, second, third and fourth corners define first, second, third and fourth stiffening corners; and
- the top wall and the first, second, third and fourth side walls have a first stiffness and the first, second, third and fourth corners have a second stiffness, the second stiffness being higher than the first stiffness.

2. The filter of claim 1, wherein the fibers are impregnated with a composition comprising a mixture of a first product obtained by polymerisation of saccharide units and a second product consisting of at least one inorganic colloidal binding agent.

3. The filter of claim 1, wherein the fibers are glass fibers, silica fibers or a mixture thereof, impregnated with a first product obtained by caramelization of a mixture comprising sucrose, water, and at least one additive selected from the group consisting of acids, inorganic wetting agents and acid phosphate adhesives.

4. The filter of any one of claims 1 to 3, wherein the first and third side walls (14, 18; 114, 118; 214, 218; 314, 318; 414, 418; 514, 518; 614, 618; 714, 718; 1514, 1518; 1614, 1618) oppose the second and fourth side walls (16, 20; 116, 120; 216, 220; 316, 320; 416, 420; 516, 520; 616, 620; 716, 720; 1516, 1520; 1616, 1616) and wherein the first, second, third and fourth side walls define a quadrilateral.

5. The filter of any one of claims 1 to 4, wherein the first distal end portion has a first facing end portion (238; 338; 438; 538; 1538; 1638) extending inwardly or outwardly from the first distal end portion, wherein the second distal end portion has a second facing end portion (340; 440; 540; 1540; 1640) extending inwardly or outwardly from the second distal end portion, wherein the third distal end portion has a third facing end portion (442; 542; 1542; 1642) extending inwardly or outwardly from the third distal end portion, wherein the fourth distal end portion has a fourth facing end portion (544; 1544; 1644) extending inwardly or outwardly from the fourth distal end portion, and wherein, in use, parts of the first, second, third and fourth facing end portion are adapted to contact and abut against the first and second internal face wall of the mold housing in which the filter is received.

6. The filter of any one of claims 1 to 5 adapted so that, when in use, the top wall is located in an imaginary filtering section that is transverse to a flow of the liquid metal and that is adjacent to an upstream plane (UP) and the first, second, third and fourth side walls are adapted to at least partially contact respective first, second, third and fourth internal side walls of the mold housing in which the filter is received.

7. The filter of any one of claims 1 to 5, wherein the filter extends along a longitudinal axis (A-A) residing within an imaginary longitudinal plane that bisects the filter in two halves, wherein the top wall (612; 712) comprises a first portion (612a; 712a) and a second portion (612b; 712b) connected to the first portion, the second portion extending transversely with respect to the longitudinal axis and being located downwards the first portion along the longitudinal axis.

8. The filter of claim 7, wherein the first portion is defined by first, second, third and fourth trapezium surfaces (612a′, 612aʺ, 612a‴, 612aʺʺ; 712a′, 712aʺ, 712a‴, 712aʺʺ) and the second portion is a square or rectangular surface.

9. The filter of claim 7 or 8, wherein the second portion is centrally located with respect to the longitudinal axis.

10. The filter of claim 7 or 8, wherein the longitudinal axis is a first axis (A-A) and the filter extends along a second axis (B-B) that is parallel to the first axis, the second portion being centrally located with respect to the second longitudinal axis.

11. The filter of any one of claims 7 to 10, wherein the first and second portions define an internal protuberance for handling the filter with a tool or gripping device.

12. The filter of any one of claims 1 to 4, wherein each of the first, second, third and fourth side walls (114, 116, 118, 120) extends downwardly and outwardly from the top face (112) and wherein the filter has a frustopyramidal shape.

13. The filter of claim 12, wherein the filter is adapted to allow stacking of a second filter into the filter.

## Patentansprüche

1. Filter (10; 100; 200; 300; 400; 500; 600; 700; 1500; 1600), um ein flüssiges Metall zu filtern und um in einem Formgehäuse aufgenommen zu werden, das durch innere Seiten- und Stirnwände definiert ist, der Filter umfassend eine obere Wand (12; 112; 212; 312; 412; 512; 612; 712; 1512; 1612) und eine erste, eine zweite, eine dritte und eine vierte Seitenwand (14, 16, 18, 20; 114, 116, 118, 120; 214, 216, 218, 220; 314, 316, 318, 320; 414, 416, 418, 420; 514, 516, 518, 520; 614, 616, 618, 620; 714, 716, 718, 720; 1514, 1516, 1518, 1520, 1614, 1616, 1618, 1620), die sich von der oberen Wand aus nach unten erstrecken, wobei die erste, die zweite, die dritte und die vierte Seitenwand jeweils an der ersten, der zweiten, der dritten und der vierten Ecke (22, 24, 26, 28; 122, 124, 126, 128; 222, 224, 226, 228; 322, 324, 326, 328; 422, 424, 426, 428; 522, 524, 526, 528; 622, 624, 626, 628; 722, 724, 726, 728; 1522, 1524, 1526, 1528; 1622, 1624, 1626, 1628) miteinander verbunden sind, wobei sich die erste, die zweite, die dritte und die vierte Seitenwand nach unten in Richtung der ersten, der zweiten, der dritten und der vierten distalen Endabschnitte (230, 232, 234, 236; 330, 332, 334, 336; 430, 432, 434, 436; 530, 532, 534, 536; 1530, 1532, 1534, 1536; 1630, 1632, 1634, 1636) erstreckt, wobei der Filter
(i) aus einem verfestigten Gewebe umfassend hitzebeständige Fasern oder Fäden aus hitzebeständigen Fasern gefertigt ist
(ii) durch Formen und Härten eines flachen Gewebes aus hitzebeständigen Fasern oder Fäden aus hitzebeständigen Fasern erlangt wird, um die obere Wand, die erste, die zweite, die dritte und die vierte Seitenwand und die erste, die zweite, die dritte und die vierte Ecke zu bilden, und
(iii) eine Biegefestigkeit aufweist,
wobei
- die obere Wand und die erste, die zweite, die dritte und die vierte Seitenwand eine erste Faserdichte aufweisen und die erste, die zweite, die dritte und die vierte Ecke eine zweite Faserdichte aufweisen,
die zweite Faserdichte höher ist als die erste Faserdichte, sodass die erste, die zweite, die dritte und die vierte Ecke eine erste, eine zweite, eine dritte und eine vierte Versteifungsecke bilden; und
- die obere Wand und die erste, die zweite, die dritte und die vierte Seitenwand eine erste Steifigkeit aufweisen und die erste, die zweite, die dritte und die vierte Ecke eine zweite Steifigkeit aufweisen, wobei die zweite Steifigkeit höher ist als die erste Steifigkeit.

2. Filter nach Anspruch 1, wobei die Fasern mit einer Zusammensetzung imprägniert sind, umfassend ein Gemisch aus einem ersten Produkt, das durch Polymerisation von Saccharideinheiten erlangt wird, und einem zweiten Produkt, das aus mindestens einem anorganischen kolloidalen Bindemittel besteht.

3. Filter nach Anspruch 1, wobei die Fasern Glasfasern, Siliziumdioxidfasern oder ein Gemisch davon sind, die mit einem ersten Produkt imprägniert sind, das durch Karamellisierung eines Gemischs erlangt wird, das Saccharose, Wasser und mindestens einen Zusatzstoff enthält, ausgewählt aus der Gruppe, bestehend aus Säuren, anorganischen Netzmitteln und sauren Phosphatklebern.

4. Filter nach einem der Ansprüche 1 bis 3, wobei die erste und die dritte Seitenwand (14, 18; 114, 118; 214, 218; 314, 318; 414, 418; 514, 518; 614, 618; 714, 718; 1514, 1518; 1614, 1618) gegenüber der zweiten und der vierten Seitenwand (16, 20; 116, 120; 216, 220; 316, 320; 416, 420; 516, 520; 616, 620; 716, 720; 1516, 1520; 1616, 1616) sind und wobei die erste, die zweite, die dritte und die vierte Seitenwand ein Viereck bilden.

5. Filter nach einem der Ansprüche 1 bis 4, wobei der erste distale Endabschnitt einen ersten gegenüberliegenden Endabschnitt (238; 338; 438; 538; 1538; 1638) aufweist, der sich von dem ersten distalen Endabschnitt nach innen oder außen erstreckt, wobei der zweite distale Endabschnitt einen zweiten gegenüberliegenden Endabschnitt (340; 440; 540; 1540; 1640) aufweist, der sich von dem zweiten distalen Endabschnitt nach innen oder außen erstreckt, wobei der dritte distale Endabschnitt einen dritten gegenüberliegenden Endabschnitt (442; 542; 1542; 1642) aufweist, der sich von dem dritten distalen Endabschnitt nach innen oder nach außen erstreckt, wobei der vierte distale Endabschnitt einen vierten zugewandten Endabschnitt (544; 1544; 1644) aufweist, der sich von dem vierten distalen Endabschnitt nach innen oder nach außen erstreckt, und wobei in Verwendung Teile des ersten, des zweiten, des dritten und des vierten zugewandten Endabschnitts angepasst sind, um die erste und die zweite Innenflächenwand des Formgehäuses, in dem der Filter aufgenommen ist, berühren und daran anliegen.

6. Filter nach einem der Ansprüche 1 bis 5, der so angepasst ist, dass sich die obere Wand in Verwendung in einem imaginären Filterabschnitt befindet, der quer zu einer Strömung des flüssigen Metalls verläuft und an eine stromaufwärtige Ebene (UP) angrenzt, und dass die erste, die zweite, die dritte und die vierte Seitenwand so angepasst sind, dass sie die jeweilige erste, zweite, dritte und vierte innere Seitenwand des Formgehäuses, in dem der Filter aufgenommen ist, zumindest teilweise zu berühren.

7. Filter nach einem der Ansprüche 1 bis 5, wobei sich der Filter entlang einer Längsachse (A-A) erstreckt, die innerhalb einer imaginären Längsebene liegt, die den Filter in zwei Hälften halbiert, wobei die obere Wand (612; 712) einen ersten Abschnitt (612a; 712a) und einen zweiten Abschnitt (612b; 712b), der mit dem ersten Abschnitt verbunden ist, umfasst, wobei sich der zweite Abschnitt quer zu der Längsachse erstreckt und entlang der Längsachse unter dem ersten Abschnitt angeordnet ist.

8. Filter nach Anspruch 7, wobei der erste Abschnitt durch eine erste, eine zweite, eine dritte und eine vierte Trapezfläche (612a′, 612aʺ, 612a‴, 612aʺʺ; 712a′, 712aʺ, 712a‴, 712aʺʺ) definiert ist und der zweite Abschnitt eine quadratische oder rechteckige Fläche ist.

9. Filter nach Anspruch 7 oder 8, wobei sich der zweite Abschnitt mittig in Bezug auf die Längsachse befindet.

10. Filter nach Anspruch 7 oder 8, wobei die Längsachse eine erste Achse (A-A) ist und der Filter sich entlang einer zweiten Achse (B-B) erstreckt, die parallel zu der ersten Achse ist, wobei der zweite Abschnitt in Bezug auf die zweite Längsachse mittig angeordnet ist.

11. Filter nach einem der Ansprüche 7 bis 10, wobei der erste und der zweite Abschnitte einen inneren Vorsprung zum Handhaben des Filters mit einem Werkzeug oder einer Greifvorrichtung definieren.

12. Filter nach einem der Ansprüche 1 bis 4, wobei sich jede von der ersten, der zweiten, der dritten und der vierten Seitenwand (114, 116, 118, 120) von der oberen Fläche (112) nach unten und nach außen erstreckt und wobei der Filter eine kegelstumpfförmige Form aufweist.

13. Filter nach Anspruch 12, wobei der Filter angepasst ist, um zu ermöglichen, dass ein zweiter Filter in den Filter gestapelt werden kann.

## Revendications

1. Filtre (10 ; 100 ; 200 ; 300 ; 400 ; 500 ; 600 ; 700 ; 1500 ; 1600) pour filtrer un métal liquide et destiné à être reçu dans un boîtier de moule défini par des parois latérales et de face internes, le filtre comprenant une paroi haute (12 ; 112 ; 212 ; 312 ; 412 ; 512 ; 612 ; 712 ; 1512 ; 1612) et des première, deuxième, troisième et quatrième parois latérales (14, 16, 18, 20 ; 114, 116, 118, 120 ; 214, 216, 218, 220 ; 314, 316, 318, 320 ; 414, 416, 418, 420 ; 514, 516, 518, 520 ; 614, 616, 618, 620 ; 714, 716, 718, 720 ; 1514, 1516, 1518, 1520, 1614, 1616, 1618, 1620) s'étendant vers le bas depuis la paroi haute, les première, deuxième, troisième et quatrième parois latérales étant jointes ensemble au niveau de premier, deuxième, troisième et quatrième coins (22, 24, 26, 28 ; 122, 124, 126, 128 ; 222, 224, 226, 228 ; 322, 324, 326, 328 ; 422, 424, 426, 428 ; 522, 524, 526, 528 ; 622, 624, 626, 628 ; 722, 724, 726, 728; 1522, 1524, 1526, 1528 ; 1622, 1624, 1626, 1628) respectifs, les première, deuxième, troisième et quatrième parois latérales s'étendant vers le bas vers des première, deuxième, troisième et quatrième portions d'extrémité distale (230, 232, 234, 236 ; 330, 332, 334, 336 ; 430, 432, 434, 436 ; 530, 532, 534, 536 ; 1530, 1532, 1534, 1536 ; 1630, 1632, 1634, 1636), dans lequel le filtre
(i) est fait d'une étoffe rigidifiée comprenant des fibres thermorésistantes ou des fils de fibres thermorésistantes
(ii) est obtenu par moulage et durcissement d'une feuille plate d'une étoffe comprenant les fibres thermorésistantes ou les fils de fibres thermorésistantes pour former ladite paroi haute, lesdites première, deuxième, troisième et quatrième parois latérales et lesdits premier, deuxième, troisième et quatrième coins, et
(iii) a une résistance à la flexion,
dans lequel
- la paroi haute et les première, deuxième, troisième et quatrième parois latérales ont une première densité de fibres et les premier, deuxième, troisième et quatrième coins ont une deuxième densité de fibres,
la deuxième densité de fibres étant supérieure à la première densité de fibres de sorte que les premier, deuxième, troisième et quatrième coins définissent des premier, deuxième, troisième et quatrième coins de raidissement ; et
- la paroi haute et les première, deuxième, troisième et quatrième parois latérales ont une première rigidité et les premier, deuxième, troisième et quatrième coins ont une deuxième rigidité, la deuxième rigidité étant supérieure à la première rigidité.

2. Filtre selon la revendication 1, dans lequel les fibres sont imprégnées d'une composition comprenant un mélange d'un premier produit obtenu par polymérisation de motifs saccharide et d'un deuxième produit consistant en au moins un agent liant colloïdal inorganique.

3. Filtre selon la revendication 1, dans lequel les fibres sont des fibres de verre, des fibres de silice ou un mélange de celles-ci, imprégnées d'un premier produit obtenu par caramélisation d'un mélange comprenant du saccharose, de l'eau et au moins un additif choisi dans le groupe constitué par des acides, des agents mouillants inorganiques et les adhésifs au phosphate acide.

4. Filtre selon l'une quelconque des revendications 1 à 3, dans lequel les première et troisième parois latérales (14, 18 ; 114, 118 ; 214, 218 ; 314, 318 ; 414, 418 ; 514, 518 ; 614, 618 ; 714, 718 ; 1514, 1518 ; 1614, 1618) s'opposent aux deuxième et quatrième parois latérales (16, 20 ; 116, 120 ; 216, 220 ; 316, 320 ; 416, 420 ; 516, 520 ; 616, 620 ; 716, 720 ; 1516, 1520 ; 1616, 1616) et dans lequel les première, deuxième, troisième et quatrième parois latérales définissent un quadrilatère.

5. Filtre selon l'une quelconque des revendications 1 à 4, dans lequel la première portion d'extrémité distale a une première portion d'extrémité en regard (238 ; 338 ; 438 ; 538 ; 1538 ; 1638) s'étendant vers l'intérieur ou vers l'extérieur depuis la première portion d'extrémité distale, dans lequel la deuxième portion d'extrémité distale a une deuxième portion d'extrémité en regard (340 ; 440 ; 540 ; 1540 ; 1640) s'étendant vers l'intérieur ou vers l'extérieur depuis la deuxième portion d'extrémité distale, dans lequel la troisième portion d'extrémité distale a une troisième portion d'extrémité en regard (442 ; 542 ; 1542 ; 1642) s'étendant vers l'intérieur ou vers l'extérieur depuis la troisième portion d'extrémité distale, dans lequel la quatrième portion d'extrémité distale a une quatrième portion d'extrémité en regard (544 ; 1544 ; 1644) s'étendant vers l'intérieur ou vers l'extérieur depuis la quatrième portion d'extrémité distale, et dans lequel, en utilisation, des parties des première, deuxième, troisième et quatrième portions d'extrémité en regard sont adaptées pour entrer en contact avec les première et deuxième parois de face internes du boîtier de moule dans lequel le filtre est reçu et venir en butée contre celles-ci.

6. Filtre selon l'une quelconque des revendications 1 à 5 adapté de sorte que, lors de l'utilisation, la paroi haute soit située dans une section de filtrage imaginaire qui est transversale à un écoulement du métal liquide et qui est adjacente à un plan amont (UP) et les première, deuxième, troisième et quatrième parois latérales sont adaptées pour entrer au moins partiellement en contact avec les première, deuxième, troisième et quatrième parois latérales internes respectives du boîtier du moule dans lequel le filtre est reçu.

7. Filtre selon l'une quelconque des revendications 1 à 5, dans lequel le filtre s'étend le long d'un axe longitudinal (A-A) disposé dans un plan longitudinal imaginaire qui divise le filtre en deux moitiés, dans lequel la paroi haute (612 ; 712) comprend une première portion (612a ; 712a) et une deuxième portion (612b ; 712b) raccordée à la première portion, la deuxième portion s'étendant transversalement vis-à-vis de l'axe longitudinal et étant située vers le bas de la première portion le long de l'axe longitudinal.

8. Filtre selon la revendication 7, dans lequel la première portion est définie par des première, deuxième, troisième et quatrième surfaces trapézoïdales (612a′, 612aʺ, 612a‴, 612aʺʺ ; 712a′, 712aʺ, 712a‴, 712aʺʺ) et la deuxième portion est une surface carrée ou rectangulaire.

9. Filtre selon la revendication 7 ou 8, dans lequel la deuxième portion est située centralement vis-à-vis de l'axe longitudinal.

10. Filtre selon la revendication 7 ou 8, dans lequel l'axe longitudinal est un premier axe (A-A) et le filtre s'étend le long d'un deuxième axe (B-B) qui est parallèle au premier axe, la deuxième portion étant située centralement vis-à-vis du deuxième axe longitudinal.

11. Filtre selon l'une quelconque des revendications 7 à 10, dans lequel les première et deuxième portions définissent une protubérance interne pour manipuler le filtre avec un outil ou un dispositif de préhension.

12. Filtre selon l'une quelconque des revendications 1 à 4, dans lequel chacune des première, deuxième, troisième et quatrième parois latérales (114, 116, 118, 120) s'étend vers le bas et vers l'extérieur depuis la face haute (112) et dans lequel le filtre a une forme troncopyramidale.

13. Filtre selon la revendication 12, dans lequel le filtre est adapté pour permettre l'empilement d'un deuxième filtre dans le filtre.
